# EUROPEAN PATENT APPLICATION

(11) **EP 4 050 179 A1**
(43) Date of publication of application: **31.08.2022**
(21) Application number: 21893118.6
(22) Date of filing: 30.12.2021
(51) Int. Cl.: E04F 15/02, E04F 15/10, B32B 27/30, B32B 27/06, B32B 27/20, B32B 33/00, C08L 27/06, C08L 33/04, C08K 9/04, C08K 3/36

(54) **MULTI-LAYER CO-EXTRUDED STONE PLASTIC FLOOR AND MANUFACTURING METHOD THEREFOR**

(30) Priority: 31.12.2020 CN 202011641442; 31.12.2020 CN 202023347070 U
(71) Applicant: Zhejiang Yongyu Furniture Co., Ltd., Huzhou, Zhejiang 313000 (CN)
(72) Inventor: SONG, Jiangang, Huzhou, Zhejiang 313000 (CN); WANG, Jinsong, Huzhou, Zhejiang 313000 (CN); FU, Jiajin, Huzhou, Zhejiang 313000 (CN); YAN, Peng, Huzhou, Zhejiang 313000 (CN)
(74) Representative: Wang, Bo
(86) International application number: PCT/CN2021/143142
(87) International publication number: WO 2022/143913

(57) **Abstract**

The present disclosure discloses a multi-layer co-extrusion stone plastic floor. The multi-layer co-extrusion stone plastic floor includes at least one co-extrusion stone layer, the co-extrusion stone plastic layer including a first stable layer, a stone plastic rigid layer, and a second stable layer successively. A size change rate of the first stable layer and the second stable layer is within a range of 0 to 0.12% within a temperature range of -15 °C to 80 °C. At least one of the first stable layer, the stone plastic rigid layer, and the second stable layer includes composite particles of acrylate copolymer (ACR)/nano SiO₂. The multi-layer co-extrusion stone plastic floor has improved strength, improved thermal stability and reduce thermal deformation by adding stable layers above/below the plastic rigid layer and adding the composite particles of ACR/nano SiO₂.

## Description

### CROSS-REFERENCE TO RELATED APPLICATIONS

This application claims priority to Chinese Patent Application No. 202011641442.6, filed on December 31, 2020, and Chinese Patent Application No. 20202347070.4, filed on December 31, 2020, the entire contents of each of which are hereby incorporated by references.

### TECHNICAL FIELD

The present disclosure relates to the field of floor manufacturing, and in particular, to multi-layer co-extrusion stone plastic floors and manufacturing methods thereof.

### BACKGROUND

A stone plastic floor (SPC) is a multi-layer PVC floor with advantages of mildew proof, moisture proof, fire prevention, wear-resistant, simple installation, and long service life, which is widely used in indoor floor decoration. In general, a base material layer of a multi-layer stone plastic floor is extruded by a thermal fusion process with natural stone powder (e.g., calcium carbonate powder) and polymer resin (e.g., polyvinyl chloride, PVC) as main raw materials. In order to reduce cost, a large number of inorganic fillers are usually added. However, a thermal stability of PVC material is poor, adding the inorganic filler will increase brittleness of the PVC material, and chlorinated polyethylene (CPE) toughening will reduce a vicat softening point of the floor due to adding an additive of CPE. The floor is easily to warp and deform, arch, and fall off and fracture of the latch, and the service life of the floor is reduced.

Therefore, it is necessary to provide a stone plastic floor with good thermal stability and minor thermal deformations.

### SUMMARY

One aspect of some embodiments of the present disclosure provides a multi-layer co-extrusion stone plastic floor. The multi-layer co-extrusion stone plastic floor may include at least one co-extrusion plastic layer. The co-extrusion stone plastic layer at least includes a first stable layer, a stone plastic rigid layer, and a second stable layer successively. A size change rate of the first stable layer and the second stable layer is within a range of 0 to 0.12% within a temperature range of -15 °C to 80 °C. At least one of the first stable layer, the stone plastic rigid layer, and the second stable layer includes composite particles of acrylate copolymer (ACR)/nano SiO₂.

One aspect of some embodiments of the present disclosure provides a method for manufacturing a multi-layer co-extrusion stone plastic floor. The method may include obtaining a first mixture by mixing materials of at least one of a first stable layer and a second stable layer. The method may include obtaining a charge mixture by stirring the first mixture, the first mixture including composite particles of ACR/nano SiO₂. The method may also include obtaining a second mixture by mixing materials of a stone plastic rigid layer. The method also include obtaining a second charge mixture by stirring the second mixture, the second mixture including the composite particles of ACR/nano SiO₂. The method may further include obtaining a co-extrusion stone plastic layer by extruding the first mixture and the second mixture through an extruder, the co-extrusion stone plastic layer including a three-layer structure of the first stable layer, the stone plastic rigid layer, and the second stable layer successively.

### BRIEF DESCRIPTION OF THE DRAWINGS

The present disclosure is further described in terms of exemplaryembodiments. These exemplary embodiments are described in detail with reference to the drawings. These embodiments are non-limiting exemplary embodiments, in which like reference numerals represent similar structures throughout the several views of the drawings, and wherein:
FIG. 1 is a sectional view of a co-extrusion stone plastic layer according to some embodiments of the present disclosure;
FIG. 2 is a sectional view of a multi-layer co-extrusion stone plastic floor according to some embodiments of the present disclosure;
FIG. 3 is a flowchart illustrating an exemplary process for manufacturing a multi-layer co-extrusion stone plastic floor according to some embodiments of the present disclosure.

### DETAILED DESCRIPTION

In the following detailed description, numerous specific details are set forth by way of examples in order to provide a thorough understanding of the relevant disclosure. Obviously, drawings described below are only some examples or embodiments of the present disclosure. Those skilled in the art, without further creative efforts, may apply the present disclosure to other similar scenarios according to these drawings. Unless obviously obtained from the context or the context illustrates otherwise, the same numeral in the drawings refers to the same structure or operation.

As used herein, the singular forms "a," "an," and "the" may be intended to include the plural forms as well, unless the context clearly indicates otherwise. In general, it will be understood that the terms "include" and/or "comprise", when used in this disclosure, specify the presence of steps and/or elements, but do not exclude the presence or addition of one or more other steps and/or elements thereof.

The flowcharts used in the present disclosure illustrate operations that systems implement according to some embodiments of the present disclosure. It is to be expressly understood, the operations of the flowcharts may be implemented not in order. Conversely, the operations may be implemented in an inverted order, or simultaneously. Moreover, one or more other operations may be added to the flowcharts. One or more operations may be removed from the flowcharts.

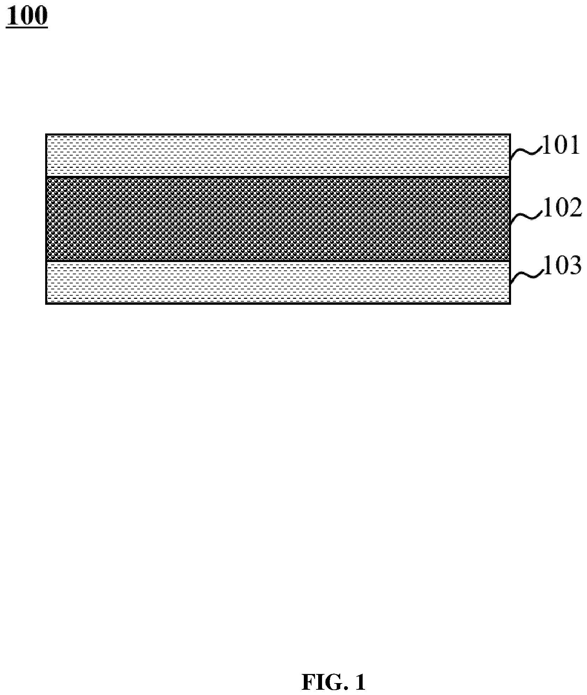

FIG. 1 is a sectional view of a co-extrusion stone plastic layer according to some embodiments of the present disclosure.

A co-extrusion stone plastic floor may be a floor with a multi-layer structure. In some embodiments, the co-extrusion stone plastic floor may at least include one or more co-extrusion stone plastic layers. The co-extrusion stone plastic layer may refer to a structure for providing support for the co-extrusion stone plastic floor. For example, the co-extrusion stone plastic layer may provide main strength or hardness for the co-extrusion stone plastic floor.

In some embodiments, the co-extrusion stone plastic layer of the co-extrusion stone plastic floor may be a multi-layer structure. The co-extrusion stone plastic layer may include a stable layer and a stone plastic rigid layer. The stable layer may refer to a structural layer for stabilizing other layers when other layers in the co-extrusion stone plastic floor are deformed. The stone plastic rigid layer may be a structural layer for providing intensity and support for the co-extrusion stone plastic floor.

In some embodiments, a count of the stable layer and/or the stone plastic rigid layer in the co-extrusion stone plastic floor may be one or more. In some embodiments, materials of each of the one or more stable layers may be the same or different. In some embodiments, materials of each of the one or more stone plastic rigid layers may be the same or different.

In some embodiments, an order between different layers in the co-extrusion stone plastic layer may be that the stone plastic rigid layer is located between the stable layers, or the stone plastic rigid layer is located above the stable layers. In some embodiments, two adjacent layers may be connected in a variety of ways. For example, two adjacent layers may be connected by adhesives. In some embodiments, the adhesives may refer to materials, such as polylactic acid (PLA) resins, phenolic resins (PF), etc., that cause objects to bond with each other. Alternatively, two adjacent layers may be connected by hot pressing. It should be understood that connection methods between different adjacent layers may be the same or different.

In some embodiments, the co-extrusion stone plastic layer may include two stable layers and a stone plastic rigid layer. As shown in FIG. 1, the co-extrusion stone plastic layer 100 may include a first stable layer 101, a stone plastic rigid layer 102, and a second stable layer 103 successively from top to bottom.

The first stable layer may refer to a structural layer for stabilizing other layers in the co-extrusion stone plastic floor. For example, the first stable layer may be a structural layer that provides downward tension during thermal expansion and cold contraction of other layers (e.g., an Ultra-Violet (UV) coating layer, a wear-resistant layer, etc.) located above the first stable layer of the co-extrusion stone plastic floor (e.g., a co-extrusion stone plastic floor 200). More descriptions regarding details of the other layers may be found elsewhere in the present disclosure.

In some embodiments, the first stable layer may cause minor deformation under external forces of the other layers (e.g., other layers located above the first stable layer). For example, when a pressure is 2000 pounds per square inch (psi), a deformation of the first stable layer may be less than 0.13 mm, where 1 psi=0.006895 Mpa. For example, the first stable layer may be a rigid material layer. The materials of the first stable layer may prevent the first stable layer from deformation under external forces, thereby ensuring a compressive strength of the stone plastic floor and preventing brittle fracture of the stone plastic floor.

In some embodiments, a size change rate of the first stable layer may be within a range of 0 to 0.12% within a temperature range of -15 °C to 80 °C.

In some embodiments, the first stable layer may include composite particles of acrylate copolymer (ACR)/nano SiO2.

The composite particles of ACR/nano SiO₂ may be chemical substances prepared based on ACR and nano SiO₂. In some embodiments, the composite particles of ACR/nano SiO₂ may be nanoparticles. For example, a particle size of the composite particles of ACR/nano SiO₂ may be within a range of 20 nm to 80 nm. It should be understood that the particle size of the composite particles of ACR/nano SiO₂ may be determined based on the nano SiO₂, which is used to prepare the composite particles of ACR/nano SiO₂.

In some embodiments, the composite particles of ACR/nano SiO₂ may be prepared in a variety of methods. For example, the composite particles of ACR/nano SiO₂ may be obtained by physical or mechanical mixing ACR and nano SiO₂. For example, the composite particles of ACR/nano SiO₂ may be obtained by chemical mixing ACR and nano SiO₂.

In some embodiments, the composite particles of ACR/nano SiO₂ may be obtained by dispersing the nano SiO₂ particles that are surface modified by a modifier in an acrylate monomer and polymerizing the acrylate monomer to obtain a grafted polymer chain by an allyl group. For example, the composite particles of ACR/nano SiO₂ are prepared by dispersing nano SiO₂ that is modified by a coupling agent of methacrylic acid-3-trimethoxysilane (MPS) in an acrylic acid monomer and polymerizing the acrylic acid monomer to obtain a micro lotion polymer.

In some embodiments, the second stable layer may refer to a structural layer for stabilizing other layers of the co-extrusion stone floor. For example, the second stable layer may be a structural layer that provides downward tension during thermal expansion and cold contraction of the other layers (e.g., a first stable layer, a stone plastic rigid layer, an UV coating layer, a wear-resistant layer, etc.) located above the second stable layer of the co-extrusion stone plastic floor.

In some embodiments, the second stable layer may cause minor deformation under external forces of the other layers (e.g., other layers located above the second stable layer). For example, when the pressure is 2000 psi, the deformation of the second stable layer is less than 0.13 mm, where 1 psi = 0.006895 Mpa. Similar to the first stable layer, the second stable layer may be a rigid material layer.

In some embodiments, a size change rate of the second stable layer may be within a range of 0 to 0.12% within a temperature range of -15 °C to 80 °C.

In some embodiments, the second stable layer may include the composite particles of ACR/nano SiO₂. More descriptions regarding the composite particles of ACR/nano SiO₂ may be found elsewhere in the present disclosure.

The stone plastic rigid layer may refer to a structural layer for providing strength and support for the co-extrusion plastic floor.

In some embodiments, the stone plastic rigid layer may include the composite particles of ACR/nano SiO₂.

In some embodiments, the stone plastic rigid layer, the first stable layer, and the second stable layer may also include other ingredients. More descriptions regarding the other ingredients may be found elsewhere in the present disclosure.

The co-extrusion stone plastic layer on the co-extrusion stone plastic floor set as a three-layer structure can effectively control the overall stability of the co-extrusion stone plastic floor and the warped tile shape caused by the shrinkage of the other layers of the co-extrusion stone plastic floor. At the same time, the stone plastic rigid layer in the co-extrusion stone plastic layer can ensure the strength of the co-extrusion stone plastic floor and improve the thermal resistance and creep resistance of the co-extrusion stone plastic floor.

Moreover, the performance of the co-extrusion stone plastic floor may be significantly improved by adding the composite particles of ACR/nano SiO₂ into the floor (for example, the stable layer or the stone plastic rigid layer). The composite particles of ACR/nano SiO₂ may be nanoparticles that have size effect, local field effect, and quantum effect, which shows excellent properties (including improving the strength of the floor and improving the thermal deformation resistance of the floor by increasing the Vicat softening point of the floor) that conventional materials do not have.

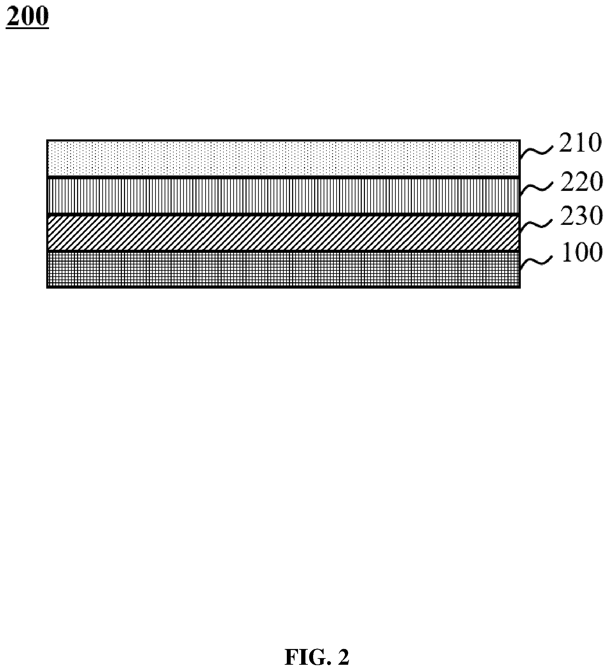

As mentioned above, the co-extrusion plastic floors may also include other layers in addition to the co-extrusion plastic layer. In some embodiments, the multi-layer co-extrusion stone plastic floor may also include at least one of following structural layers: a UV coating layer, a wear-resistant layer, or a color film layer. More descriptions regarding the UV coating layer, the wear-resistant layers, and the color film layers may be found elsewhere in the present disclosure, e.g., FIG. 2 and the relevant descriptions thereof.

In some embodiments, an ACR grafting rate on a surface of the composite particles of ACR/nano SiO₂ may be within a range of 70% to 110%.

The ACR grafting rate may refer to the efficiency of combining other functional groups through chemical bonds on a formula of ACR. The other functional groups may refer to added atoms or atomic groups that determine chemical properties of organic compounds. For example, the other functional groups may include methyl, epoxy groups, or the like.

Different grafting rates on the surface of the composite particles of ACR/nano SiO₂ may have different effects on the performance of the multi-layer co-extrusion stone plastic floor. Specifically, the effects on the performance of the multi-layer co-extrusion stone plastic floor may be reflected by a group of experiments as follows.

In the group of experiments, the first stable layer and the second stable layer of the multi-layer co-extrusion stone plastic floor include 100 parts by weight of the PVC, 270 parts by weight of inorganic filler, 1.5 parts by weight of polyethylene wax, 10 parts by weight of stabilizer, 1.4 parts by weight of stearic acid, 0.6 parts by weight of oxidized polyethylene wax, 15 parts by weight of the composite particles of ACR/nano SiO₂ with different grafting rate, and 0.5 parts by weight of carbon black, respectively. The stone plastic rigid layer of the multi-layer co-extrusion stone plastic floor includes 100 parts by weight of the PVC, 360 parts by weight of the inorganic filler, 1.2 parts by weight of the polyethylene wax, 5 parts by weight of the stabilizer, 1.0 parts by weight of the stearic acid, 10 parts by weight of the composite particles of ACR/nano SiO₂ with different grafting rate, and 10 parts by weight of glass beads.

The experimental results include an impact strength of the multi-layer co-extrusion stone plastic floor. The impact strength may be energy absorbed by a unit cross-sectional area when a sample is broken under an impact load. The impact load may refer to a load that acts on an object in a very short time.

The experimental results are as follows:
(1) When the ACR grafting rate on the surface of the composite particles of ACR/nano SiO₂ is 0%, the impact strength of the multi-layer co-extrusion stone plastic floor is 1.8 KJ/m².
(2) When the ACR grafting rate on the surface of the composite particles of ACR/nano SiO₂ is 70%, the impact strength of the multi-layer co-extrusion stone plastic floor is 10.5 KJ/m².
(3) When the ACR grafting rate on the surface of the composite particles of ACR/nano SiO2 is 85%, the impact strength of the multi-layer co-extrusion stone plastic floor is 10.8 kJ/m².
(4) When the ACR grafting rate on the surface of the composite particles of ACR/nano SiO₂ is 100%, the impact strength of the multi-layer co-extrusion stone plastic floor is 11.3 KJ/m².
(5) When the ACR grafting rate on the surface of the composite particles of ACR/nano SiO₂ is 110%, the impact strength of the multi-layer co-extrusion stone plastic floor is 10.8 KJ/m².

The experimental data show that when the materials of the first stable layer, the second stable layer, and the stone plastic rigid layer are the same and the ACR grafting rate of the composite particles of ACR/nano SiO₂ is 70%, 85%, 100%, and 110%, respectively, the multi-layer co-extrusion stone plastic floor has a better impact resistance than the multi-layer co-extrusion stone plastic floor with the ACR grafting rate of the composite particles of ACR/nano SiO₂ being 0%. The ACR grafting rate is 0%, indicating that the ACR is not combined with SiO₂ through a chemical bond and the ACR is not modified when nano SiO₂ particles are mixed with the ACR. The impact resistance may reflect the toughening effect of the multi-layer co-extrusion stone plastic floor. For example, the better the impact resistance is, the better the toughening effect is. It should be understood that the multi-layer co-extrusion stone plastic floor has an excellent toughening effect when the ACR grafting rate on the surface of the composite particles of ACR/nano SiO₂ is within a range of 70% to 110%. At the same time, the composite particles of ACR/nano SiO₂ may be dispersed into fine particles and suspended in the PVC, so as to increase the toughening effect of the PVC, causing that the toughening effect of the PVC with the composite particles ACR/nano SiO₂ is significantly better than the toughening effect of the nano SiO₂ particles and unmodified ACR. The experimental data may be used as the basis of relevant embodiments.

In some embodiments, the ACR grafting rate on the surface of the composite particles of ACR/nano SiO₂ may be 70%. The stone plastic floor has an excellent toughening effect when the ACR grafting rate on the surface of the composite particles of ACR/nano SiO₂ is 70%.

In some embodiments, the ACR grafting rate on the surface of the composite particles of ACR/nano SiO₂ may be 85%. The stone plastic floor has an excellent toughening effect when the ACR grafting rate on the surface of the composite particles of ACR/nano SiO₂ is 85%. At the same time, the impact resistance, impact strength, static bending strength, fracture elongation displacement, and warpage of the stone plastic floor reach an excellent comprehensive performance in product design.

In some embodiments, the ACR grafting rate on the surface of the composite particles of ACR/nano SiO₂ may be 100%. The stone plastic floor has the best toughening effect when the ACR grafting rate on the surface of the composite particles of ACR/nano SiO₂ is 100%.

In some embodiments, the ACR grafting rate on the surface of the composite particles of ACR/nano SiO₂ may be 110%. The stone plastic floor also has an excellent toughening effect when the grafting rate on the surface of the composite particles of ACR/nano SiO₂ is 110%.

As mentioned above, the stable layer and stone plastic rigid layer may include a plurality of ingredients. For example, the stable layer and the stone plastic rigid layer may also include PVC in addition to the mentioned composite particles of ACR/nano SiO₂. In some embodiments, the stone plastic rigid layer may include PVC. In some embodiments, at least one of the first stable layer and the second stable layer may include PVC.

In some embodiments, a weight percent of the PVC in the stone plastic rigid layer may be within a range of 18% to 21%. In some embodiments, a weight percent of the PVC in the at least one of the first stable layer and the second stable layer may be within a range of 25% to 30%. In some embodiments, a weight ratio of a weight of the composite particles of ACR/nano SiO₂ in a layer to a weight of the PVC in the corresponding layer is within a range of 10% to 15%. For example, a weight ratio of a weight of the composite particles of ACR/nano SiO₂ in the stone plastic rigid layer to a weight of the PVC in the stone plastic rigid layer is within a range of 10% to 15%.

In some embodiments, the weight percent of the PVC in the stone plastic rigid layer may be 18%. The weight percent of the PVC in the at least one of the first stable layer and the second stable layer may be 25%. In some embodiments, the weight ratio of a weight of the composite particles of ACR/nano SiO₂ in a layer to a weight of the PVC in the corresponding layer may be 10%.

In some embodiments, the weight percent in the stone plastic rigid layer may be 19.5%. The weight percent of the PVC in the at least one of the first stable layer and the second stable layer may be 27%. In some embodiments, the weight ratio of the wight of the composite particles of ACR/nano SiO₂ in a layer to the weight of the PVC in the corresponding layer may be 12.5%.

In some embodiments, the weight percent of the PVC in the stone plastic rigid layer may be 20%. The weight percent of the PVC in the at least one of the first stable layer and the second stable layer may be 28%. In some embodiments, the weight ratio of a weight of the composite particles of ACR/nano SiO₂ in a layer to the weight of the PVC in the corresponding layer may be 13%.

In some embodiments, the weight percent of the PVC in the stone plastic rigid layer may be 21%. The weight percent of the PVC in the at least one of the first stable layer and the second stable layer may be 30%. In some embodiments, the weight ratio of the weight of the composite particles of ACR/nano SiO₂ in a layer to the weight of the PVC in the corresponding layer may be 15%.

In some embodiments, the stone plastic rigid layer may include 10-15 parts by weight of the composite particles of ACR/nano SiO₂ based on 526.8 parts by weight of the stone plastic rigid layer. For example, the weight of the composite particles of ACR/nano SiO₂ may be 12.5 parts based on 526.8 parts by weight of the stone plastic rigid layer.

The different weight percent of the composite particles of ACR/nano SiO₂ may have different effects on the performance of the multi-layer co-extrusion stone plastic floor. Specifically, the effects on the performance may be reflected by a group of experiments as follows.

In the group of experients, the first stable layer and the second stable layer of the multi-layer co-extrusion stone plastic floor may include 100 parts by weight of the PVC, 270 parts by weight of the inorganic filler, 1.5 parts by weight of the ethylene wax, 10 parts by weight of the stabilizer, 1.4 parts by weight of the stearic acid, 0.6 parts by weight of the oxidized polyethylene wax, 15 parts by weight of the composite particles of ACR/nano SiO₂, and 0.5 parts by weight of the carbon black, respectively. The stone plastic rigid layer of the multi-layer co-extrusion stone plastic floor include 100 parts by weight of the PVC, 360 parts by weight of the inorganic filler, 1.2 parts by weight of the polyethylene wax, 5 parts of the stabilizer, 1.0 parts by weight of the stearic acid, 10 parts by weight of the glass beads, and the weight of the composite particles of ACR/nano SiO₂ as variables.

Experimental results may include impact strength, static bending strength, thermal deformation vicat, and heating warpage, where the impact strength refers to energy absorbed by the unit cross-sectional area when the sample breaks under the impact load, the static bending strength refers to pressure strength borne by the specimen when it is bent to fracture, the thermal deformation vicat refers to a temperature at which the sample is pressed into 1 mm depth by a 1 mm² pressure needle in liquid heat transfer medium under certain load and constant temperature rise conditions, and the heating warpage refers to a degree of distortion of the object surface when the object surface recovers to 23±2 °C after heating at 80 °C for 6 hours.

The experimental results are as follows:
(1) When the weight of the composite particles of ACR/nano SiO₂ in the stone plastic rigid layer is 0, the impact strength is 2.0 KJ/m², the static bending strength is 20 MPa, the thermal deformation vicat is 45 °C, and the heating warpage is 1.5 mm.
(2) When the weight of the composite particles of ACR/nano SiO₂ in the stone plastic rigid layer is 10 parts, the impact strength is 13.0 KJ/m², the static bending strength is 32 MPa, the thermal deformation vicat is 65 °C, and the heating warpage is 0.3 mm.
(3) When the weight of the composite particles of the ACR/nano SiO₂ in the stone plastic rigid layer is 12.5 parts, the impact strength is 13.2 KJ/m², the static bending strength is 32 MPa, the thermal deformation vicat is 65 °C, and the heating warpage is 0.28 mm.
(4) When the weight of the composite particles of ACR/nano SiO₂ in the stone plastic rigid layer is 15 parts, the impact strength is 13.5 KJ/m², the static bending strength is 32 MPa, the thermal deformation vicat is 65 °C, and the heating warpage is 0.3 mm.
(5) When the weight of the composite particles of ACR/nano SiO₂ in the stone plastic rigid layer is 20 parts, the impact strength is 12.5 KJ/m², the static bending strength is 30 MPa, the thermal deformation vicat is 65 °C, and the heating warpage is 0.70 mm.

The experimental data show that when the weight of the composite particles of ACR/nano SiO₂ in the stone plastic rigid layer is 10 parts, 12.5 parts, and 15 parts, respectively, the stone plastic floor has a better impact resistance and thermal stability than the stone plastic floor with the weight of the composite particles of ACR/nano SiO₂ being 0. It should be understood that the stone plastic floor has good impact resistance and thermal stability when the stone plastic rigid layer includes 10-15 parts by weight of the composite particles of ACR/nano SiO₂. These experimental data may be used as the basis of relevant embodiments.

In some embodiments, the weight of the composite particles of ACR/nano SiO₂ in the stone plastic rigid layer may be 10 parts. The stone plastic floor has good impact resistance and thermal stability when the plastic rigid layer includes 10 parts by weight of the composite particles of ACR/nano SiO₂.

In some embodiments, the weight of the composite particles of ACR/nano SiO₂ in the stone plastic rigid layer may be 12.5 parts. The stone plastic floor has good impact resistance and thermal stability when the plastic rigid layer includes 12.5 parts by weight of the composite particles of ACR/nano SiO₂.

In some embodiments, the weight of the composite particles of ACR/nano SiO₂ in the stone plastic rigid layer may be 13 parts. The stone plastic floor has the best impact resistance and thermal stability when the plastic rigid layer includes 13 parts by weight of the composite particles of ACR/nano SiO₂.

In some embodiments, the weight of the composite particles of ACR/nano SiO₂ in the stone plastic rigid layer may be 15 parts. The stone plastic floor has good impact resistance and thermal stability when the plastic rigid layer includes 15 parts by weight of the composite particles of ACR/nano SiO₂.

In some embodiments, the stone plastic rigid layer may also include glass beads. The glass bead may refer to a kind of hollow glass sphere with a small size. A density of the glass beads may be within a range of 0.50 g/cm³ to 0.70 g/cm³ and a particle size of the glass beads may be within a range of 45 µm to 55 µm.

In some embodiments, the glass beads may be modified hollow glass beads. The modified hollow glass beads refer to hollow glass beads with changed properties. The changed properties may include changes in lipophilic properties of the surface and different states (e.g., dispersion or fluidity in the molten state). In some embodiments, a weight ratio of a weight of the glass beads to a weight of the PVC in the stone plastic rigid layer may be within a range of 10% to 15%. For example, the weight ratio of the weight of the glass beads to the weight of the PVC in the stone plastic rigid layer may be 10%. For another example, the weight ratio of the weight of the glass beads to the weight of the PVC in the stone plastic rigid layer may be 12.5%. For another example, the weight ratio of the weight of the glass beads to the weight of the PVC in the stone plastic rigid layer may be 14%. For another example, the weight ratio of the weight of the glass beads to the weight of the PVC in the stone plastic rigid layer may be 15%.

The glass beads are added to the PVC of the stone plastic rigid layer, which can improve the fluidity of materials processing, and effectively improve the strength, creep resistance, and heat stability of the rigid stone plastic layer, so that the stone plastic floor is not easy to deform in the process of use.

In some embodiments, the stone plastic rigid layer may include 10-15 parts by weight of the glass beads based on 526.8 parts by weight of the stone plastic rigid layer. For example, the stone plastic rigid layer may include 12.5 parts by weight of the glass beads based on 526.8 parts by weight of the stone plastic rigid layer.

Different weights of the glass beads may have different effects on the performance of the multi-layer co-extrusion stone plastic floor. Specifically, the effects on the performance may be reflected by a group of experiments as follows.

In the group of experiments, the first stable layer and the second stable layer of the multi-layer co-extrusion stone plastic floor include 100 parts by weight of the PVC, 270 parts by weight of the inorganic filler, 1.5 parts by weight of the polyethylene wax, 10 parts by weight of the stabilizers, 1.4 parts by weight of the stearic acid, 0.6 parts by weight of the oxidized polyethylene wax, 15 parts by weight of the composite particles of ACR/nano SiO₂, and 0.5 parts by weight of the carbon black, respectively. The stone plastic rigid layer of the multi-layer co-extrusion stone plastic floor includes 100 parts by weight of the PVC, 360 parts by weight of the inorganic filler, 1.2 parts by weight of the polyethylene wax, 5 parts by weight of the stabilizers, 1.0 parts by weight the stearic acid, 10 parts by weight of the composite particles of ACR/nano SiO₂, and the weight of the glass beads as variables.

The experimental results may include the static bending strength, a breaking elongation displacement, the heating warpage, a heating size change rate, and the thermal deformation vicat, where the breaking elongation displacement refers to a displacement of an object passed when it is broken and the heating size change rate refers to a degree of size change of the object when it recovers to 23±2 °C after heating at 80 °C for 6 hours.

The experimental results are as follows:
(1) When the weight of the glass beads in the stone plastic rigid layer is 0, the static bending strength is 20 MPa, the breaking elongation displacement is 14 mm, the heating warpage is 1.2 mm, the heating size change rate is 0.190%, and the thermal deformation vicat is 45 °C.
(2) When the weight of the glass beads in the stone plastic rigid layer is 10 parts, the static bending strength is 32 MPa, the breaking elongation displacement is 12 mm, the heating warpage is 0.25 mm, the heating size change rate is 0.050%, and the thermal deformation vicat is 65 °C.
(3) When the weight of the glass beads in the stone plastic rigid layer is 12.5 parts, the static bending strength is 32.5 MPa, the breaking elongation displacement is 11 mm, the heating warpage is 0.35 mm, the heating size change rate is 0.060%, and the thermal deformation vicat is 65 °C.
(4) When the weight of the glass beads in the tone plastic rigid layer is 15 parts, the static bending strength is 34 MPa, the breaking elongation displacement is 10 mm, the heating warpage is 0.35 mm, the heating size change rate is 0.055%, and the thermal deformation vicat is 65 °C.
(5) When the weight of the glass beads in the stone plastic rigid layer is 20 parts, the static bending strength is 36 MPa, the breaking elongation displacement is 4 mm, the heating warpage is 0.80 mm, the heating size change rate is 0.220%, and the thermal deformation vicat is 55 °C.

The experimental data show that when the weight of the glass beads in the stone plastic rigid layer is 10 parts, 12.5 parts, and 15 parts, respectively, the stone plastic floor has a better impact resistance and thermal stability than the stone plastic floor with the weight of the glass beads being 0. It should be understood that the stone plastic floor has good impact resistance and thermal stability when the stone plastic rigid layer includes 10-15 parts by weight of the glass beads. These experimental data may be used as the basis of relevant embodiments.

In some embodiments, the weight of the glass beads in the stone plastic rigid layer may be 10 parts. The stone plastic floor has good impact resistance and thermal stability when the stone plastic rigid layer includes 10 parts by weight of the glass beads.

In some embodiments, the weight of the glass beads in the stone plastic rigid layer may be 12.5 parts. The stone plastic floor has good impact resistance and thermal stability when the stone plastic rigid layer includes 12.5 parts by weight of the glass beads.

In some embodiments, the weight of the glass beads in the stone plastic rigid layer may be 14 parts. The stone plastic floor has good impact resistance and thermal stability, when the stone plastic rigid layer includes 14 parts by weight of the glass beads.

In some embodiments, the weight of the glass beads in the stone plastic rigid layer may be 15 parts. The stone plastic floor has good impact resistance and thermal stability when the stone plastic rigid layer includes 15 parts by weight of the glass beads.

In some embodiments, the stable layer and the stone plastic rigid layer may also include other ingredients. For example, in addition to the PVC, the ingredients of the stone plastic rigid layer may also include the inorganic filler, the polyethylene wax, the stabilizer, the stearic acid, or other additives, such as colorant, plasticizer, etc. For another example, the stable layer (the first stable layer and/or the second stable layer) may also include the inorganic filler, the polyethylene wax, the stabilizer, the stearic acid, the oxidative polyethylene wax, the carbon black, or other additives, etc.

In some embodiments, a weight of other ingredients of the stable layer and the stone plastic rigid layer may be determined according to different situations. For example, the ingredients of the first stable layer and the second stable layer may include 100 parts by weight of the PVC, 12.5 parts by weight of the composite particles of ACR/nano SiO₂ and at least one of following ingredients respectively based on 353.5 parts by weight of the first stable layer and/or the second stable layer. The following ingredients may include 240 parts by weight of the inorganic filler, 1.2 parts by weight of the polyethylene wax, 8 parts by weight of the stabilizers, 1.1 parts by weight of the stearic acid, 0.4 parts by weight of the oxidized polyethylene wax, or 0.3 parts by weight of the carbon black. For example, the ingredients of the stone plastic rigid layer also include 100 parts by weight of the PVC and at least one of following ingredients based on 526.8 parts by weight of the stone plastic rigid layer. The following ingredients may include 392.5 parts by weight of the inorganic filler, 1.5 parts by weight of the polyethylene wax, 6.5 parts by weight of the stabilizers, or 1.3 parts by weight of the stearic acid.

The stabilizer refers to an agent that maintains a structural stability of polymer compounds. For example, the stabilizer may include calcium stearate, dibasic lead salt, etc.

The inorganic filler may refer to added inorganic filler. The inorganic fillers may include silicate inorganic fillers, carbonate inorganic fillers, and sulfate inorganic fillers. For example, the silicate inorganic fillers may include clay, mica powder, talc powder, feldspar powder, etc. The carbonate inorganic fillers may include heavy calcium carbonate, light calcium carbonate, and ultra-fine calcium carbonate. The sulfate inorganic fillers may include barium sulfate and lithopone.

The different weight of the ingredients of the first stable layer may have different effects on the performance of the multi-layer co-extrusion stone plastic floor. Specifically, the effects on the performance may be reflected by a group of experiments as follows.

In the following experiments, a thickness of the wear-resistant layer is 0.3 mm, and the thickness of the co-extrusion stone plastic layer is 3.7 mm, of which the thickness of the first stable layer is 0.95 mm, the thickness of the stone plastic rigid layer is 1.8 mm, and the thickness of the second stable layer is 0.95 mm, the stone plastic rigid layer of the multi-layer co-extrusion stone plastic floor includes 100 parts by weight of the PVC, 360 parts by weight of the inorganic filler, 1.2 parts by weight of the polyethylene wax, 5 parts by weight of the stabilizer, 1.0 parts by weight of the stearic acid, 10 parts by weight of the composite particles of ACR/nano SiO₂, or 10 parts by weight of the glass beads. The ingredients of the first stable layer are different from the ingredients of the stone plastic rigid layer.

The experimental results may include a room temperature warpage, a heating warpage, a heating size change rate, and a low-temperature size change rate, where the room temperature warpage refers to a degree of distortion on the surface of the object at 25 °C and the low-temperature size change rate refers to a degree of size change of the object when it is restored to 23±2 °C at -18 °C for 6 hours.

The experimental results are as follows:
(1) When the stable layer includes 100 parts by weight of the PVC, 270 parts by weight of the inorganic filler, 1.5 parts by weight of the polyethylene wax, 10 parts by weight of the stabilizer, 1.4 parts by weight of the stearic acid, 0.6 parts by weight of the oxidized polyethylene wax, 15 parts by weight of the composite particles of ACR/nano SiO₂, and 0.5 parts by weight of the carbon black, the room temperature warpage is 0.20 mm, the heating warpage is 0.25 mm, the heating size change rate is 0.05%, and the low-temperature size change rate is 0.06%.
(2) When the stable layer includes 100 parts by weight of the PVC, 240 parts by weight of the inorganic filler, 1.2 parts by weight of the polyethylene wax, 7.5 parts by weight of the stabilizer, 1.1 parts by weight of the stearic acid, 0.4 parts by weight the oxidized polyethylene wax, 12.5 parts by weight of the composite particles of ACR/nano SiO₂, and 12.5 parts by weight of the carbon black, the room temperature warpage is 0.30 mm, the heating warpage is 0.50 mm, the heating size change rate is 0.08%, and the low-temperature size change rate is 0.09%.
(3) When the stable layer includes 100 parts by weight of the PVC, 210 parts by weight of the inorganic filler, 0.9 parts by weight of the polyethylene wax, 6 parts by weight of the stabilizer, 0.8 parts by weight of the stearic acid, 0.2 parts by weight the oxidation polyethylene wax, 10 parts by weight of the composite particles of ACR/nano SiO₂, and 0.5 parts by weight of the carbon black, the room temperature warpage is 0.35 mm, the heating warpage is 0.60 mm, the heating size change rate is 0.075%, and the low temperature size change rate is 0.10%.
(4) When the stable layer includes 100 parts by weight of the PVC, 180 parts by weight of the inorganic filler, 0.9 parts by weight of the polyethylene wax, 6 parts by weight of the stabilizer, 0.8 parts by weight of the stearic acid, 0.2 parts by weight of the oxidation polyethylene wax, 10 parts by weight of the composite particles of ACR/nano SiO₂, and 0.5 parts by weight of the carbon black, the room temperature warpage is 0.75 mm, the heating warpage is 0.90 mm, the heating size change rate is 0.18%, and the low-temperature size change rate is 0.20%.
(5) When the stable layer includes 100 parts by weight of the PVC, 300 parts by weight of the inorganic filler, 1.5 parts by weight of the polyethylene wax, 10 parts by weight of the stabilizer, 1.4 parts by weight of the stearic acid, 0.6 parts by weight of the oxidized polyethylene wax, 15 parts by weight of the composite particles of ACR/nano SiO₂, and 0.5 parts by weight of the carbon black, the room temperature warpage is 0.65 mm, the heating warpage is 1.50 mm, the heating size change rate is 0.13%, and the low-temperature size change rate is 0.15%.

The experimental data show that the multi-layer co-extrusion stone plastic floor has good deformation resistance and thermal stability when the thickness of each layer and the ingredients of the stone plastic rigid layer are the same, the stable layer includes 100 parts by weight of the PVC, 270 parts by weight of the inorganic filler, 1.5 parts by weight of the polyethylene wax, 10 parts by weight of the stabilizer, 1.4 parts by weight of the stearic acid, 0.6 parts by weight of the oxidized polyethylene wax, 15 parts by weight of the composite particles of ACR/nano SiO₂, and 0.5 parts by weight of the carbon black.

It should be understood that the multi-layer co-extrusion stone plastic floor has good deformation resistance and thermal stability when the first stable layer includes 100 parts by weight of the PVC, 210-270 parts by weight of the inorganic filler, 0.9-1.5 parts by weight of the polyethylene wax, 6-10 parts by weight of the stabilizer, 0.8-1.4 parts by weight of the stearic acid, 0.2-0.6 parts by weight of the oxidized polyethylene wax, 10-15 parts by weight of the composite particles of ACR/nano SiO₂, and 0.1-0.5 parts by weight of the carbon black based on 363.5 parts by weight of the first stable layer. These experimental data may be used as the basis of relevant embodiments.

In some embodiments, the first stable layer includes 100 parts by weight of the PVC, 210-270 parts by weight of the inorganic filler, 0.9-1.5 parts by weight of the polyethylene wax, 6-10 parts by weight of the stabilizer, 0.8-1.4 parts by weight of the stearic acid, 0.2-0.6 parts by weight of the oxidized polyethylene wax, 10-15 parts by weight of the composite particles of ACR/nano SiO₂, and 0.1-0.5 parts by weight of the carbon black based on 363.5 parts by weight of the first stable layer.

In some embodiments, the multi-layer co-extrusion stone plastic floor has good deformation resistance and thermal stability when the first stable layer may include 100 parts by weight of the PVC, 210 parts by weight of the inorganic filler, 0.9 parts by weight of the polyethylene wax, 6 parts by weight of the stabilizer, 0.8 parts by weight of the stearic acid, 0.2 parts by weight of the oxidized polyethylene wax, 10 parts by weight of the composite particles of ACR/nano SiO₂, and 0.1 parts by weight of the carbon black based on 363.5 parts by weight of the first stable layer.

In some embodiments, the multi-layer co-extrusion stone plastic floor has good deformation resistance and thermal stability when the first stable layer may include 100 parts by weight of the PVC, 240 parts by weight of the inorganic filler, 1.2 parts by weight of the polyethylene wax, 8 parts by weight of the stabilizer, 1.1 parts by weight of the stearic acid, 0.4 parts by weight of the oxidized polyethylene wax, 12.5 parts by weight of the composite particles of ACR/nano SiO₂, and 0.3 parts by weight of the carbon black based on 363.5 parts by weight of the first stable layer.

In some embodiments, the multi-layer co-extrusion stone plastic floor has good deformation resistance and thermal stability when the first stable layer may include 100 parts by weight of the PVC, 270 parts by weight of the inorganic filler, 1.5 parts by weight of the polyethylene wax, 10 parts by weight of the stabilizer, 1.4 parts by weight of the stearic acid, 0.6 parts by weight of the oxidized polyethylene wax, 15 parts by weight of the composite particles of ACR/nano SiO₂, and 0.5 parts by weight of the carbon black based on 363.5 parts by weight of the first stable layer.

In some embodiments, a thickness of the first stable layer may be within a range of 0.55 mm to 1.15 mm, a thickness of the stone plastic rigid layer may be within a range of 1.8 mm to 2.2 mm, and a thickness of the second stable layer may be within a range of 0.55 mm to 1.15 mm.

In some embodiments, a thickness ratio of a stable layer (e.g., the first stable layer or the second stable layer) and the stone plastic rigid layer may be 1:(1.8-2.2). In some embodiments, the thickness between the first stable layer, the second stable layer, and the stone plastic rigid layer may be the same or different. For example, a thickness ratio of the first stable layer, the stone plastic rigid layer, and the second stable layer may be 1:(1.8-2.2): 1.

The different thicknesses of the first stable layer may have different effects on the performance of the multi-layer co-extrusion stone plastic floor. Specifically, the effects on the performance may be reflected by a group of experiments as follows.

In the group of experiments, the first stable layer and the second stable layer include 100 parts by weight of the PVC, 270 parts by weight of the inorganic filler, 1.5 parts by weight of the polyethylene wax, 10 parts by weight of the stabilizer, 1.4 parts by weight of the stearic acid, 0.6 parts by weight of the oxidized polyethylene wax, 15 parts by weight of the composite particles of ACR/nano SiO₂, and 0.5 parts by weight of the carbon black, respectively, the stone plastic rigid layer includes 100 parts by weight of the PVC, 360 parts by weight of the inorganic filler, 1.2 parts by weight of the polyethylene wax, 5 parts by weight of the stabilizer, 1.0 parts by weight of the stearic acid, 10 parts by weight of the composite particles of ACR/nano SiO₂, and 10 parts by weight of the glass beads. In different experiments, the room temperature warpage, the heating warpage, the heating size change rate, and the low-temperature size change rate of the multi-layer co-extrusion stone plastic floor are tested by changing the thickness of the first stable layer.

The experimental results are as follows:
(1) When the thickness of the wear-resistant layer is 0.3 mm, and the thickness of the co-extrusion stone plastic layer is 3.7 mm, of which the thickness of the first stable layer is 0.95 mm, the thickness of the rigid layer is 1.8 mm, and the thickness of the second stable layer is 0.95 mm, the experimental results are as follows: the room temperature warpage is 0.20 mm, the heating warpage is 0.25 mm, the heating size change rate at 80 °C is 0.05%, and the low-temperature size change rate at -18 °C is 0.06%.
(2) When the thickness of the wear-resistant layer is 0.3 mm, and the thickness of the co-extrusion layer is 3.7 mm, of which the thickness of the first stable layer is 0.75 mm, the thickness of the rigid layer is 2.0 mm, and the thickness of the second stable layer is 0.95 mm, the experimental results are as follows: the room temperature warpage is 0.70 mm, the heating warpage is 0.70 mm, the heating change rate at 80 °C is 0.12%, and the low temperature size change rate at -18 °C is 0.20%.
(3) When the thickness of the wear-resistant layer is 0.3 mm, and the thickness of the co-extrusion stone plastic layer is 3.7 mm, of which the thickness of the first stable layer is 0.55 mm, the thickness of the rigid layer is 2.2 mm, and the thickness of the second stable layer is 0.95 mm, the experimental results are as follows: the room temperature warpage is 0.85 mm, the heating warpage is 0.70 mm, the heating size change rate at 80 °C is 0.25%, the low temperature size change rate at -18 °C is 0.22%.
(4) When the thickness of the wear-resistant layer is 0.3 mm, and the thickness of the co-extrusion stone plastic layer is 3.7 mm, of which the thickness of the first stable layer is 1.15 mm, the thickness of the rigid layer is 1.8 mm, and the thickness of the second stable layer is 0.75 mm, the experimental results are as follows: the room temperature warpage is 1.0 mm, the heating warpage is 1.2 mm, the heating size change rate at 80 °C is 0.30%, and the low-temperature size change rate at 18 °C is 0.18%.

The experimental data show that when the thickness of the first stable layer is 0.95 mm, the stone plastic floor has a better thermal resistance and thermal stability than the stone plastic floor with the thickness of the first stable layer being 0.75 mm, 0.55 mm, and 1.15 mm, respectively. These data may be used as the basis of relevant embodiments.

In some embodiments, the thickness ratio of the first stable layer and the stone plastic rigid layer may be 1:1.8. The multi-layer co-extrusion stone plastic floor has good thermal resistance and thermal stability when the thickness ratio of the first stable layer and the stone plastic rigid layer may be 1:1.8.

In some embodiments, the thickness ratio of the first stable layer and the stone plastic rigid layer may be 1:1.9. The multi-layer co-extrusion stone plastic floor has good thermal resistance and thermal stability by setting the thickness of the first stable layer and the stone plastic rigid layer when the thickness ratio of the first stable layer and the stone plastic rigid layer may be 1:1.9.

In some embodiments, the thickness ratio of the first stable layer and the stone plastic rigid layer may be 1:2.0. The multi-layer co-extrusion stone plastic floor has good thermal resistance and thermal stability when the thickness ratio of the first stable layer and the stone plastic rigid layer may be 1:2.0.

In some embodiments, the thickness ratio of the first stable layer and the stone plastic rigid layer may be 1:2.2. The multi-layer co-extrusion stone plastic floor has good thermal resistance and stability when the thickness ratio of the first stable layer and the stone plastic rigid layer may be 1:2.2.

The different thicknesses of the second stable layer will have different effects on the performance of the multi-layer co-extrusion stone plastic floor. Specifically, the effects on the performance may be reflected by a group of experiments as follows.

In the group of experiments, the first stable layer and the second stable layer include 100 parts by weight of the PVC, 270 parts by weight of the inorganic filler, 1.5 parts by weight of the polyethylene wax, 10 parts by weight of the stabilizer, 1.4 parts by weight of the stearic acid, 0.6 parts by weight of the oxidized polyethylene wax, 15 parts by weight of the composite particles of ACR/nano SiO₂, or 0.5 parts by weight of the carbon black, respectively, the stone plastic rigid layer includes 100 parts by weight of the PVC, 360 parts by weight of the inorganic filler, 1.2 parts by weight of the polyethylene wax, 5 parts by weight of the stabilizer, 1.0 parts by weight of the stearic acid, 10 parts by weight of the composite particles of ACR/nano SiO₂, or 10 parts by weight of the glass beads. In different experiments, the room temperature warpage, the heating warpage, the heating size change rate, and the low-temperature size change rate of the floor are tested by changing the thickness of the second stable layer.

The experimental results are as follows:
(1) When the thickness of the wear-resistant layer is 0.3 mm, and the thickness of the co-extrusion stone plastic layer is 3.7 mm, of which the thickness of the first stable layer is 0.95 mm, the thickness of the stone plastic rigid layer is 1.8 mm, and the thickness of the second stable layer is 0.95 mm, the experimental results are as follows: the room temperature warpage is 0.20 mm, the heating warpage is 0.25 mm, the heating size change rate at 80 °C is 0.05%, and the low temperature size change rate at -18 °C is 0.06%.
(2) When the thickness of the wear-resistant layer is 0.3 mm, and the thickness of the co-extrusion stone plastic layer is 3.7 mm, of which the thickness of the first stable layer is 0.95 mm, the thickness of the stone plastic rigid layer is 2.0 mm, and the thickness of the second stable layer is 0.75 mm, the experimental results are as follows: the room temperature warpage is 1.20 mm, the heating warpage is 1.0 mm, the heating size change rate at 80 °C is 0.18%, and the low temperature size change rate at -18 °C is 0.23%.
(3) When the thickness of the wear-resistant layer is 0.3 mm, the thickness of the co-extrusion stone plastic layer is 3.7 mm, of which the thickness of the first stable layer is 0.95 mm, the thickness of the stone plastic rigid layer is 2.2 mm, and the thickness of the second stable layer is 0.55 mm, the test results are as follows: the room temperature warpage 2.0 mm, the heating warpage is 2.5 mm, the heating size change rate at 80 °C is 0.25%, and the low temperature size change rate at -18 °C is 0.35%.
(4) When the thickness of the wear-resistant layer is 0.3 mm, the thickness of the co-extrusion stone plastic layer is 3.7 mm, of which the thickness of the first stable layer is 0.75 mm, the thickness of the stone plastic rigid layer is 1.8 mm, and the thickness of the second stable layer is 1.15 mm, the experimental results are as follows: the room temperature warpage is 0.80 mm, the heating warpage is 0.70 mm, the temperature size change rate at 80 °C is 0.20%, and the low-temperature size change rate at -18 °C is 0.25%.

The experimental data show that when the stable layers and the stone plastic rigid layer include the mentioned ingredients, the thickness of the first stable layer is consistent, and the thickness of the second stable layer is 0.95 mm, the multi-layer co-extrusion stone plastic floor has a better thermal resistance and stability than that the multi-layer co-extrusion stone plastic floor with the thicknesses of the second stable layer is 0.75 mm, 0.55 mm, and 1.15 mm, respectively. These data may be used as the basis of relevant embodiments.

In some embodiments, the thickness ratio of the second stable layer and the stone plastic rigid layer may be 1:1.8. The stone plastic floor has good thermal resistance and thermal stability when the thickness ratio of the second stable layer and the stone plastic rigid layer may be 1:1.8.

In some embodiments, the thickness ratio of the second stable layer and the stone plastic rigid layer may be 1:1.9. The stone plastic floor has good thermal resistance and thermal stability when the thickness ratio of the second stable layer and the stone plastic rigid layer may be 1:1.9.

In some embodiments, the thickness ratio of the second stable layer to the stone plastic rigid layer may be 1:2.0. The stone plastic floor has good thermal resistance and thermal stability when the thickness ratio of the second stable layer to the stone plastic rigid layer may be 1:2.0.

In some embodiments, the thickness ratio of the second stable layer to the stone plastic rigid layer may be 1:2.2. The stone plastic floor has good thermal resistance and thermal stability when the thickness ratio of the second stable layer to the stone plastic rigid layer may be 1:2.2.

In conclusion, only when the thickness ratio of the first stable layer, the stone plastic rigid layer, and the second stable layer is 1:(1.8-2.2):1, the size change rate of the first stable layer and the second stable layer may be within a range of 0 to 0.12% within a temperature range of -15 °C to 80 °C, so that the stone plastic floor has good thermal resistance and stability. If the thickness ratio of the first stable layer, the stone plastic rigid layer, and the second stable layer is not within a range of 1:(1.8-2.2): 1, the size change rate of the first stable layer and the second stable layer will be greater than the range of 0 to 0.12% within a temperature range of -15 °C to 80 °C, and the stone plastic floor has a poor thermal resistance and thermal stability.

FIG. 2 is a sectional view of a multi-layer co-extrusion stone plastic floor according to some embodiments of the present disclosure.

In some embodiments, the multi-layer co-extrusion stone plastic floor may include a co-extrusion stone plastic layer 100, a UV coating layer 210, a wear-resistant layer 220, and a color film layer 230.

The UV coating layer 210 may be a polyurethane UV curable coating layer applied to the surface. In some embodiments, the UV coating layer may have effects of wear resistance, stain resistance, water, and moisture resistance.

The wear-resistant layer 220 may be a structural layer that reduces mechanical wear.

In some embodiments, the thickness of the wear-resistant layer may affect the thickness of the first stable layer and the second stable layer. Specifically, when the greater the thickness of the wear-resistant layer is, the greater the strength required to be provided by the rigid structure layer is, so the greater the thickness of the first stable layer and the second stable layer is. For example, when a total thickness of the multi-layer coextrusion stone plastic floor is consistent and the thickness of the wear-resistant layer is 0.3 mm, the thickness ratio of the first stable layer, the stone plastic rigid layer, and the second stable layer may be 1:2.2:1. For example, when a total thickness of the multi-layer coextrusion stone plastic floor is consistent and the thickness of the wear-resistant layer is 0.40 mm, the thickness ratio of the first stable layer, the stone plastic rigid layer, and the second stable layer may be 1:2.0:1.

The color film layer 230 may be a decorative layer on the floor that provides color, pattern, and other effects.

In some embodiments, two adjacent layers of the UV coating layer, the wear-resistant layer, and the color film layer may be connected in a variety of ways. For example, two adjacent layers may be connected by adhesives. For another example, two adjacent layers may be connected by hot pressing. It should be understood that the connection methods between different adjacent layers may be the same or different.

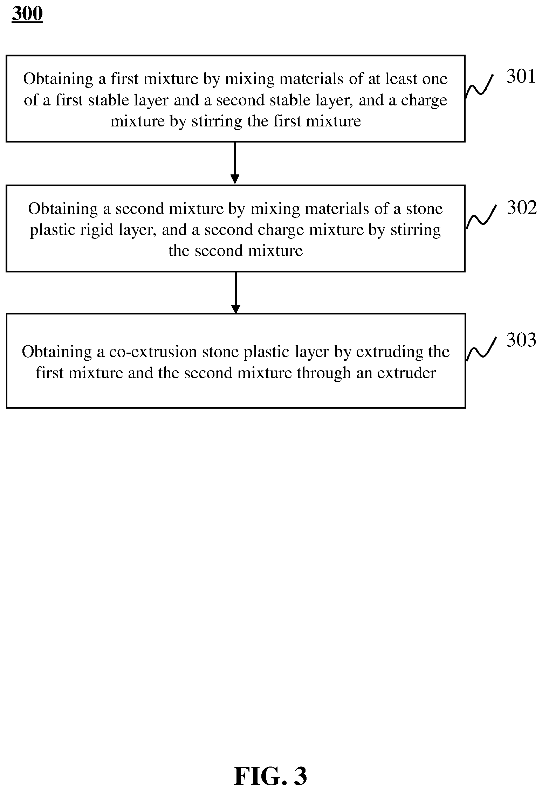

FIG. 3 is a flowchart illustrating an exemplary process of a method for manufacturing a multi-layer co-extrusion stone plastic floor according to some embodiments of the present disclosure.

In step 301, obtaining a first mixture by mixing materials of at least one of a first stable layer and a second stable layer and obtaining a charge mixture by stirring the first mixture.

More descriptions regarding definitions of the first stable layer and the second stable layer may be found elsewhere in the present disclosure, e.g., FIG. 1 and the relevant descriptions thereof. The material of the first stable layer refers to raw materials used to manufacture the first stable layer. More descriptions regarding the materials of the first stable layer may be found elsewhere in the present disclosure, e.g., FIG. 1 and the relevant descriptions thereof. The material of the second stable layer refers to raw materials used to manufacture the second stable layer. More descriptions regarding materials of the second stable layer may be found elsewhere in the present disclosure, e.g., FIG. 1 and the relevant descriptions thereof. The first mixture refers to substance obtained by mixing the materials of the first stable layer or the second stable layer at a ratio as shown in FIG. 1. The first charge mixture refers to substance obtained by processing the first mixture. The processing may include stirring for heating, cooling, or the like, or any combination thereof.

In some embodiments, the first mixture may include the composite particles of ACR/nano SiO₂. More descriptions regarding definitions of the composite particles of ACR/nano SiO₂ may be found elsewhere in the present disclosure, e.g., FIG. 1 and the relevant descriptions thereof.

In some embodiments, the materials of at least one of the first stable layer or the second stable layer may be placed into a high-speed mixer through an automatic metering system, the materials may be placed into a low-speed mixer for cooling to a temperature range of 45 °C to 60 °C after stirring for heating to a temperature range of 110 °C to 125 °C, and then the materials may be put into a discharge tank to obtain the first charge mixture.

The automatic metering system may be a digital system for quantitative proportioning of various materials.

The high-speed mixer may be a mixer with a rotating speed in the range of 860 r/min to 1500 r/min and a self friction heating or a built-in heating device.

The low-speed mixer may be a mixer with a rotating speed in a range of 325 r/min to 650 r/min and a built-in heat dissipation device. The discharge tank may be a tank used to collect materials after mixing.

Step 302, obtaining a second mixture by mixing materials of a stone plastic rigid layer and obtaining a second charge mixture by stirring the second mixture.

More descriptions regarding definitions of the stone plastic rigid layer may be found elsewhere in the present disclosure, e.g., FIG. 1 and the relevant descriptions thereof. The materials of the stone plastic rigid layer refer to raw materials used to manufacture the stone plastic rigid layer. More descriptions regarding the materials of the stone plastic rigid layer may be found elsewhere in the present disclosure, e.g., FIG. 1 and the relevant descriptions thereof. The second mixture refers to substance obtained by mixing the materials of the stone plastic rigid layer at a ratio as shown in FIG. 1. The second charge mixture refers to substance obtained by processing the second mixture. The processing may include stirring for heating, cooling, or the like, or any combination thereof.

In some embodiments, the second mixture may include the composite particles of ACR/nano SiO₂. More descriptions regarding definitions of the composite particles of ACR/nano SiO₂ may be found elsewhere in the present disclosure, e.g., FIG. 1 and the relevant descriptions thereof.

In some embodiments, the materials of the stone plastic rigid layer may be placed into the high-speed mixer through the automatic metering system, the materials may be placed into the low-speed mixer for cooling to a temperature range of 45 °C to 60 °C after stirring for heating to a temperature range of 110 °C to 125 °C, and then the materials may be put into the discharge tank to obtain the second charge mixture.

In some embodiments, the materials of the stone plastic rigid layer may be placed into the high-speed mixer through the automatic metering system, the materials may be placed into the low-speed mixer for cooling to 55 °C after stirring for heating to 115 °C, and then the materials may be put into the discharge tank to obtain the second charge mixture.

More descriptions regarding definitions of the automatic metering system, the high speed mixer, the low speed mixer, and the discharge tank may be found elsewhere in the present disclosure, for example, step 301.

Step 303, obtaining a co-extrusion stone plastic layer by extruding the first mixture and the second mixture through an extruder.

More descriptions regarding definitions of the co-extrusion stone plastic layer may be found elsewhere in the present disclosure, e.g., FIG. 1 and the relevant descriptions thereof. The extruder refers to a device that makes the heated plastic raw materials in a viscous flow state into an extrusion mold to form materials with a section similar to a shape of the extrusion mold. The viscous flow state refers to a mechanical state of the amorphous polymer under high temperature and large external force for a long time. In some embodiments, the extruder may include a non-co-extrusion extruder and a co-extrusion extruder. The non-co-extrusion extruder may include a main extruder and a mold with a channel with a cross-section shape. The co-extrusion extruder may include a main extruder, an auxiliary extruder, a blanking device, a programmable logic controller (PLC) system, a distributor, and a mode with a channel with a cross-section shape, the blanking device may be arranged on the main extruder, the main extruder is connected with the distributor through a confluent core channel, the auxiliary extruder is connected with the distributor through the confluent core channel, the distributor is connected with the mode, and the PLC system is used to control operations of the extruder and its supporting device. The co-extrusion extruder in some embodiments of the present disclosure is an existing co-extrusion extruder on the market, which will not be repeated here.

In some embodiments, the method for manufacturing the co-extrusion stone plastic layer through the extruder may include: putting the first mixture into the main extruder and the auxiliary extruder on the co-extrusion extruder for plasticization and extruding the first mixture to the upper and lower flow channels of the distributor, then putting the second mixture into another extruder and extruding the stone plastic rigid layer to a middle channel of the distributor, so as to form a multi-layer structure in the distributor, and placing the multi-layer structure into the mode, finally, obtaining a three-layer co-extrusion stone plastic layer by extruding in the mode.

In some embodiments, the extruded co-extrusion stone plastic layer may be put into calendering roller group for calendering and determining the thickness, then the extruded co-extrusion stone plastic layer may be bonded with the color film layer and the wear-resistant layer, and the embossing roller may roll a texture to form at one time, so as to obtain the stone plastic floor. The calendering roll group refers to devices that produce a texture to the material by applying pressure to the material. For example, the calendering roll group may include four rolls, five rolls, six rolls, etc. Calendering and determining thickness refer to determining a final thickness of the extruded substrate after the surface of the extruded substrate are compacted and troweled. The embossing roller refers to the rollers used to press concave-convex patterns on the surface of objects. More descriptions regarding the definition of the color film layer and the wear-resistant may be found elsewhere in the present disclosure, e.g., FIG. 2 and the relevant descriptions thereof.

In some embodiments, the materials of at least one layer of the first stable layer and the second stable layer may include 90-110 parts by weight of the PVC, 10-15 parts by weight of the composite particles of ACR/nano SiO₂, and at least one of following ingredients based on 363.5 parts by weight of the first stable layer or the second stable layer, the follow ingredients may include 210-270 parts by weight of the inorganic filler, 0.9-1.5 parts by weight of the polyethylene wax, 6-10 parts by weight of the stabilizer, 0.8-1.4 parts by weight of the stearic acid, 0.2-0.6 parts by weight of the oxidized polyethylene wax, and 0.1-0.5 parts by weight of the carbon black.

In some embodiments, the stone plastic rigid layer may include 90-110 parts by weight of the PVC, 10-15 parts by weight of the composite particles of ACR/nano SiO₂, and at least one of following ingredients based on 526.8 parts by weight of the stone plastic rigid layer, the following ingredients may include 360-425 parts by weight of the inorganic filler, 1.2-1.8 parts by weight of the polyethylene wax, 5-8 parts by weight of the stabilizer, 1.0-1.6 parts by weight of the stearic acid, and 10-15 parts by weight of the glass beads.

More descriptions regarding the materials of the first stable layer, the second stable layer, and the stone plastic rigid layer may be found elsewhere in the present disclosure, e.g., FIG. 1 and the relevant descriptions thereof.

In some embodiments, the ACR grafting rate on the surface of the composite particles of ACR/nano SiO₂ may be within a range of 70% to 110%. More descriptions regarding definitions of the ACR grafting rate may be found elsewhere in the present disclosure, example.g., FIG. 1 and the relevant descriptions thereof.

In some embodiments, the second mixture may also include the PVC. In some embodiments, the first mixture may also include the PVC. The weight ratio of the composite particles of ACR/nano SiO₂ in a mixture to a weight of the PVC is within a range of 10% to 15% in the corresponding mixture.

The weight ratio of the composite particles of ACR/nano SiO₂ in a mixture to a weight of the PVC is 12.5% in the corresponding mixture. More descriptions regarding the weight ratio of the composite particles of ACR/nano SiO₂ in a mixture to the weight of the PVC in the corresponding mixture may be found elsewhere in the present disclosure, e.g., FIG. 1 and the relevant descriptions thereof.

The basic concepts have been described above, apparently, in detail, as will be described above, and does not constitute limitations of the specification. Various alterations, improvements, and modifications may occur and be intended to those skilled in the art, though not expressly stated herein. These alterations, improvements, and modifications are intended to be suggested by this disclosure and are within the spirit and scope of the exemplary embodiments of this disclosure.

Moreover, certain terminology has been used to describe embodiments of the present disclosure. For example, the terms "one embodiment," "an embodiment," and "some embodiments" mean that a particular feature, structure, or characteristic described in connection with the embodiment is included in at least one embodiment of the present disclosure. Therefore, it is emphasized and should be appreciated that two or more references to "an embodiment" or "one embodiment" or "an alternative embodiment" in various portions of this specification are not necessarily all referring to the same embodiment. Furthermore, the particular features, structures, or characteristics may be combined as suitable in one or more embodiments of the present disclosure.

Furthermore, the recited order of processing elements or sequences, or the use of numbers, letters, or other designations therefore, is not intended to limit the claimed processes and methods to any order except as may be specified in the claims. Although the above disclosure discusses through various examples what is currently considered to be a variety of useful embodiments of the disclosure, it is to be understood that such detail is solely for that purpose and that the appended claims are not limited to the disclosed embodiments, but, on the contrary, are intended to cover modifications and equivalent arrangements that are within the spirit and scope of the disclosed embodiments. For example, although the implementation of various components described above may be embodied in a hardware device, it may also be implemented as a software only solution, e.g., an installation on an existing server or mobile device.

Similarly, it should be appreciated that in the foregoing description of embodiments of the present disclosure, various features are sometimes grouped together in a single embodiment, figure, or description thereof for the purpose of streamlining the disclosure aiding in the understanding of one or more of the various embodiments. This method of disclosure, however, is not to be interpreted as reflecting an intention that the claimed subject matter requires more features than are expressly recited in each claim. Rather, claimed subject matter may lie in less than all features of a single foregoing disclosed embodiment.

In some embodiments, the numbers expressing quantities, properties, and so forth, used to describe and claim certain embodiments of the application are to be understood as being modified in some instances by the term "about," "approximate," or "substantially." For example, "about," "approximate" or "substantially" may indicate ±20% variation of the value it describes, unless otherwise stated. Accordingly, in some embodiments, the numerical parameters set forth in the written description and attached claims are approximations that may vary depending upon the desired properties sought to be obtained by a particular embodiment. In some embodiments, the numerical parameters should be construed in light of the number of reported significant digits and by applying ordinary rounding techniques. Notwithstanding that the numerical ranges and parameters setting forth the broad scope of some embodiments of the application are approximations, the numerical values set forth in the specific examples are reported as precisely as practicable.

Each of the patents, patent applications, publications of patent applications, and other material, such as articles, books, specifications, publications, documents, things, and/or the like, referenced herein is hereby incorporated herein by this reference in its entirety for all purposes, excepting any prosecution file history associated with same, any of same that is inconsistent with or in conflict with the present document, or any of same that may have a limiting affect as to the broadest scope of the claims now or later associated with the present document. By way of example, should there be any inconsistency or conflict between the description, definition, and/or the use of a term associated with any of the incorporated material and that associated with the present document, the description, definition, and/or the use of the term in the present document shall prevail.

In closing, it is to be understood that the embodiments of the application disclosed herein are illustrative of the principles of the embodiments of the application. Other modifications that may be employed may be within the scope of the application. Thus, by way of example, but not of limitation, alternative configurations of the embodiments of the application may be utilized in accordance with the teachings herein. Accordingly, embodiments of the present application are not limited to that precisely as shown and described.

## Claims

1. A multi-layer co-extrusion stone plastic floor, comprising:
at least one co-extrusion stone plastic layer, the co-extrusion stone plastic layer at least including a first stable layer, a stone plastic rigid layer, and a second stable layer successively;
a size change rate of the first stable layer and the second stable layer being within a range of 0 to 0.12% within a temperature range of -15 °C to 80 °C; and
at least one of the first stable layer, the stone plastic rigid layer, and the second stable layer including composite particles of acrylate copolymer (ACR)/nano SiO₂.

2. The multi-layer co-extrusion stone plastic floor of claim 1, wherein an ACR grafting rate on a surface of the composite particles of ACR/nano SiO₂ is within a range of 70% to 110%.

3. The multi-layer co-extrusion stone plastic floor of claim 1, wherein the co-extrusion stone plastic layer includes the first stable layer, the stone plastic rigid layer, and the second stable layer successively, and a thickness ratio of the first stable layer, the stone plastic rigid layer, and the second stable layer is 1:(1.8-2.2): 1.

4. The multi-layer co-extrusion stone plastic floor of claim 3, wherein the stone plastic rigid layer further includes polyvinyl chloride (PVC), at least one of the first stable layer and the second stable layer further includes PVC, a weight ratio of a weight of the composite particles of ACR/nano SiO₂ in the stone plastic rigid layer to a weight of the PVC in the stone plastic rigid layer is within a range of 10% to 15%, and a weight ratio of a weight of the composite particles of ACR/nano SiO₂ in the at least one of the first stable layer and the second stable layer to a weight of the PVC in the at least one of the first stable layer and the second stable layer is within a range of 10% to 15%.

5. The multi-layer co-extrusion stone plastic floor of claim 4, wherein a weight percent of the PVC in the stone plastic rigid layer is within a range of 18% to 21%.

6. The multi-layer co-extrusion stone plastic floor of claim 4, wherein a weight percent of the PVC in the at least one of the first stable layer and the second stable layer is within a range of 25% to 30%.

7. The multi-layer co-extrusion stone plastic floor of claim 4, wherein the stone plastic rigid layer includes 10-15 parts by weight of the composite particles of ACR/nano SiO₂ based on 526.8 parts by weight of the stone plastic rigid layer.

8. The multi-layer co-extrusion stone plastic floor of claim 7, wherein the stone plastic rigid layer further includes glass beads and a weight ratio of a weight of the glass beads to the weight of the PVC in the stone plastic rigid layer is within a range of 10% to 15%.

9. The multi-layer co-extrusion stone plastic floor of claim 8, wherein the stone plastic rigid layer further includes 10-15 parts by weight of the glass beads based on 526.8 parts by weight of the stone plastic rigid layer.

10. The multi-layer co-extrusion stone plastic floor of claim 9, wherein the stone plastic rigid layer further includes 90-110 parts by weight of the PVC and at least one of following ingredients based on 526.8 parts by weight of the stone plastic rigid layer, the following ingredients including:
360-425 parts by weight of inorganic filler,
1.2-1.8 parts by weight of polyethylene wax,
5-8 parts by weight of stabilizer, or
1.0-1.6 parts by weight of stearic acid.

11. The multi-layer co-extrusion stone plastic floor of claim 4, wherein the first stable layer and the second stable layer includes 90-110 parts by weight of the PVC, 10-15 parts by weight of the composite particles of ACR/nano SiO₂, and at least one of following ingredients based on 363.5 parts by weight of the first stable layer or the second stable layer, the following ingredients including:
210-270 parts by weight of inorganic filler,
0.9-1.5 parts by weight of polyethylene wax,
6-10 parts by weight of stabilizer,
0.8-1.4 parts by weight of stearic acid,
0.2-0.6 parts by weight of oxidized polyethylene wax, or
0.1-0.5 parts by weight of carbon black.

12. The multi-layer co-extrusion stone plastic floor of claim 1, wherein the multi-layer co-extrusion stone plastic floor further comprises at least one of an Ultra-Violet (UV) coating layer, a wear-resistant layer, or a color film layer.

13. A method for manufacturing a multi-layer co-extrusion stone plastic floor according to any one of claims 1 to 12, comprising:
obtaining a first mixture by mixing materials of at least one of a first stable layer and a second stable layer,
obtaining a charge mixture by stirring the first mixture, wherein the first mixture includes composite particles of ACR/nano SiO₂;
obtaining a second mixture by mixing materials of a stone plastic rigid layer,
obtaining a second charge mixture by stirring the second mixture, wherein the second mixture includes the composite particles of ACR/nano SiO₂; and
obtaining a co-extrusion stone plastic layer by extruding the first mixture and the second mixture through an extruder, wherein the co-extrusion stone plastic layer includes a three-layer structure of the first stable layer, the stone plastic rigid layer, and the second stable layer successively.

14. The method of claim 13, wherein the first stable layer or the second stable layer includes 90-110 parts by weight of polyvinyl chloride (PVC), 10-15 parts by weight of the composite particles of ACR/nano SiO₂, and at least one of following ingredients based on 363.5 parts by weight of the first stable layer or the second stable layer, the following ingredients including:
210-270 parts by weight of inorganic filler,
0.9-1.5 parts by weight of polyethylene wax,
6-10 parts by weight of stabilizer,
0.8-1.4 parts by weight of stearic acid,
0.2-0.6 parts by weight of oxidized polyethylene wax, or
0.1-0.5 parts by weight of carbon black.

15. The method of claim 13, wherein the stone plastic rigid layer includes 90-110 parts by weight of the PVC, 10-15 parts by weight of the composite particles of ACR/nano SiO₂, and at least one of following ingredients based on 526.8 parts by weight of the stone plastic rigid layer, the following ingredients including:
360-425 parts by weight of inorganic filler,
1.2-1.8 parts by weight of polyethylene wax,
5-8 parts by weight of stabilizer,
1.0-1.6 parts by weight of stearic acid, or
10-15 parts by weight of glass beads.

16. The method of claim 13, wherein an ACR grafting rate on a surface of the composite particles of ACR/nano SiO₂ is within a range of 70% to 110%.

17. The method of claim 16, wherein the second mixture further includes PVC, the first mixture further includes PVC, a weight ratio of a weight of the composite particles of ACR/nano SiO₂ in the first mixture to a weight of the PVC in the first mixture is within a range of 10% to 15%, and a weight ratio of a weight of the composite particles of ACR/nano SiO₂ in the second mixture to a weight of the PVC in the second mixture is within a range of 10% to 15%.
